# EUROPEAN PATENT APPLICATION

(11) **EP 4 119 502 A1**
(43) Date of publication of application: **18.01.2023**
(21) Application number: 21767138.7
(22) Date of filing: 03.02.2021
(51) Int. Cl.: C01G 31/00, H01M 4/36, H01M 4/58

(54) **COATED METAL SULFIDE PARTICLES AND POSITIVE ELECTRODE ACTIVE MATERIAL FOR LITHIUM ION SECONDARY BATTERIES**

(30) Priority: 09.03.2020 JP 2020040129
(71) Applicant: National Institute Of Advanced Industrial Science and Technology, Chiyoda-ku Tokyo 100-8921 (JP)
(72) Inventor: KANDA, Hokuto, Ikeda-shi, Osaka 563-8577 (JP); TAKEUCHI, Tomonari, Ikeda-shi, Osaka 563-8577 (JP); SAKAEBE, Hikari, Ikeda-shi, Osaka 563-8577 (JP)
(74) Representative: Patentanwälte Gierlich & Pischitzis Partnerschaft mbB
(86) International application number: PCT/JP2021/003840
(87) International publication number: WO 2021/181948

(57) **Abstract**

The present invention provides coated metal sulfide particles comprising a metal sulfide that is partially or totally coated with a coating layer containing a metal oxide, the metal sulfide having a composition ratio of sulfur to a metal (S/M¹) of 2.1 to 10 in terms of the molar ratio. The coated metal sulfide particles are a material that improves charge-and-discharge cycle characteristics without reducing the initial capacity.

## Description

### Technical Field

The present invention relates to coated metal sulfide particles and a cathode active material for lithium-ion secondary batteries.

### Background Art

Since portable electronic devices, hybrid vehicles, etc. have had higher performance in recent years, the lithium-ion secondary batteries used for such devices are increasingly required to have higher capacity. However, for current lithium-ion secondary batteries, the development of higher-capacity cathodes lags behind the development of higher-capacity anodes. Even lithium nickel oxide-based materials, which are said to have a relatively high capacity, have a capacity of only about 190 to 220 mAh/g.

In contrast, sulfur, which has a theoretical capacity of as high as about 1670 mAh/g, is a promising candidate for a cathode active material. However, sulfur-based cathode active materials are typically known to lose capacity after repeated charge-and-discharge cycles. This is because of dissolution as lithium polysulfide into an organic electrolyte during charging and discharging; thus, a technique for suppressing dissolution into an organic electrolyte is essential.

Although metal sulfides are electronically conductive and additionally have reduced dissolution into an organic electrolyte, they are not satisfactory. For example, in terms of a vanadium sulfide, which is a metal sulfide, when crystalline vanadium sulfide (III) (V₂S₃) sold as a reagent is used as a cathode active material, its actual measured charge capacity is only about 23 mAh/g, and its discharge capacity is only about 52 mAh/g because a reaction with an organic electrolyte cannot be suppressed. To address this issue, the present inventors have reported that a low-crystalline vanadium sulfide having a specific composition achieves a high capacity and excellent charge-and-discharge cycle characteristics when used as an electrode active material for lithium-ion secondary batteries (see, for example, Patent Literature (PTL) 1).

### Citation List

### Patent Literature

PTL 1: WO2018/181698

### Summary of Invention

### Technical Problem

As described above, the present inventors have developed a material that achieves a high capacity and excellent charge-and-discharge cycle characteristics when used as an electrode active material for lithium-ion secondary batteries; however, the demand for higher performance for lithium-ion secondary batteries continues to increase, and further improvement in charge-and-discharge cycle characteristics is required.

The present invention has been accomplished in view of the current state of the known technology described above. A main object of the present invention is to provide a material that improves charge-and-discharge cycle characteristics without reducing the initial capacity.

### Solution to Problem

The present inventors conducted extensive research to achieve the above object and consequently found that a material in which the surface of a metal sulfide comprising sulfur and a metal in a composition ratio (S/M¹) of 2.1 to 10 in terms of the molar ratio is partially or totally coated with a coating layer containing a metal oxide can solve the above problems and improve charge-and-discharge cycle characteristics without reducing the initial capacity. The present invention has been accomplished through further research based on the above finding. Specifically, the present invention includes the following.

Item 1. Coated metal sulfide particles comprising a metal sulfide that is partially or totally coated with a coating layer containing a metal oxide, the metal sulfide having a composition ratio of sulfur (S) to a metal (M¹) (S/M¹) of 2.1 to 10 in terms of the molar ratio.

Item 2. The coated metal sulfide particles according to Item 1, wherein the coverage by the coating layer is 50 to 100%.

Item 3. The coated metal sulfide particles according to Item 1 or 2, wherein the metal sulfide has an average particle size of 1.0 to 8.0 µm.

Item 4. The coated metal sulfide particles according to any one of Items 1 to 3, wherein the metal oxide is an oxide of titanium and/or aluminum.

Item 5. The coated metal sulfide particles according to any one of Items 1 to 4, wherein the metal sulfide is a vanadium sulfide.

Item 6. A method for producing the coated metal sulfide particles of any one of Items 1 to 5, comprising the step of immersing the metal sulfide in a solution of metal alkoxide.

Item 7. The production method according to Item 6, wherein a solvent in the solution of metal alkoxide is an alcohol having 3 to 6 carbon atoms.

Item 8. The production method according to Item 6 or 7, the method comprising, after the immersion step, the step of exposure to air and/or immersion in a water-containing organic solvent.

Item 9. The production method according to any one of Items 6 to 8, wherein the step of immersion in the solution of metal alkoxide and the step of exposure to air and/or immersion in the water-containing organic solvent are repeated a plurality of times.

Item 10. A cathode active material for lithium-ion secondary batteries, comprising the coated metal sulfide particles of any one of Items 1 to 5.

Item 11. A cathode for lithium-ion secondary batteries, comprising the cathode active material for lithium-ion secondary batteries of Item 10.

Item 12. A lithium-ion secondary battery comprising the cathode for lithium-ion secondary batteries of Item 11.

### Advantageous Effects of Invention

The present invention is capable of improving charge-and-discharge cycle characteristics without reducing the initial capacity.

### Brief Description of Drawings

Fig. 1 shows scanning electron microscope images of the titanium oxide-coated low-crystalline vanadium sulfide (a-VS₄) obtained in Example 1. The image on the right is an enlarged view of the image on the left.
Fig. 2 shows the element mapping results near the particle surface of the titanium oxide-coated low-crystalline vanadium sulfide VS₄ (a-VS₄) obtained in Example 1.
Fig. 3 shows scanning electron microscope images of the low-crystalline vanadium sulfide VS₄ (a-VS₄) obtained in Comparative Example 1. The image on the right is an enlarged view of the image on the left.
Fig. 4 shows a comparison of the discharge capacities between the samples obtained in Example 1 and Comparative Example 1 after charge-and-discharge cycles (electrolyte salt: LiPF₆).
Fig. 5 shows a comparison of the discharge capacities between the samples obtained in Example 7 and Comparative Example 1 after charge-and-discharge cycles (electrolyte salt: LiTFSI).

### Description of Embodiments

In this specification, "contain" and "comprise" include all the concepts of comprising, consisting essentially of, and consisting of. In this specification, a numerical value range expressed as "A to B" means A or more and B or less.

### 1. Coated Metal Sulfide Particles

The coated metal sulfide particles of the present invention comprise a metal sulfide that is partially or totally coated with a coating layer containing a metal oxide, and the metal sulfide has a composition ratio (S/M¹) of sulfur (S) to a metal (M¹) of 2.1 to 10 in terms of the molar ratio.

### (1-1) Metal Sulfide

In the present invention, the metal sulfide may be any metal sulfide as long as it is known as a cathode active material for lithium-ion secondary batteries. Specific examples include a vanadium sulfide (WO2018/181698), a lithium titanium sulfide, a lithium niobium sulfide, a lithium titanium niobium sulfide (WO2014/148432), a (lithium) niobium sulfide, a (lithium) titanium niobium sulfide (WO2015/049986), and a lithium tin sulfide (JP2018-111616A and JP2018-172244A). Of these metal sulfides, metal sulfides that do not contain lithium are preferred because those containing lithium (e.g., a lithium titanium sulfide) must be handled in an inert atmosphere, such as an argon gas atmosphere. The descriptions in WO2018/181698, WO2014/148432, WO2015/049986, JP2018-111616A, and JP2018-172244A are incorporated herein by reference. These metal sulfides may be used alone or in a combination of two or more. Of these, vanadium sulfides are preferred since vanadium sulfides have a discharge capacity higher than other metal polysulfides (e.g., niobium sulfide, titanium niobium sulfide), and from the viewpoint of creating high-energy density batteries for practical use.

Such a metal sulfide as a core material may be a crystalline or low-crystalline (or amorphous) material. In particular, a low-crystalline (or amorphous) material is preferred from the viewpoint of specific capacity.

When particles as a core material are coated with other materials, it is usually said to be preferred that the particles as a core material have an average particle size of 10 µm or more, as recommended for physical coating. This is because it is said to be impossible to form a coating layer by physical coating on particles as a core material having an average particle size of less than 10 µm. In the present invention, even when the sulfide as a core material has a small average particle size, a coating layer can be formed since a chemical coating method can be used, such as the production method described below; thus, the metal sulfide as a core material can have an average particle size of less than 10 µm. It is thus possible to reduce the size of the coated metal sulfide particles of the present invention themselves while increasing the specific surface area, whereby the specific capacity, in particular, is easily improved. Therefore, in the present invention, the metal sulfide as a core material has an average particle size of preferably 1.0 to 8.0 µm, and more preferably 2.0 to 5.0 µm. The average particle size of the metal sulfide as a core material is determined under electron microscope (SEM) observation by averaging 10 or more particles in a target field of view of 13 µm × 9 µm.

In the present invention, the metal sulfide has a composition ratio of sulfur (S) to a metal (M¹) (S/M¹) of 2.1 to 10 in terms of the molar ratio. Since excessive dissolution into an organic electrolyte does not originally occur in terms of this substance, if the composition ratio of sulfur to a metal (S/M¹) is less than 2.1 in the molar ratio, charge-and-discharge cycle characteristics would not improve by the coating with a coating layer containing a metal oxide. On the other hand, synthesizing a metal sulfide having a composition ratio of sulfur to a metal (S/M¹) exceeding 10 in the molar ratio is difficult. The metal sulfide is preferably a low-crystalline material in order to easily suppress the reaction with an organic electrolyte in case it is brought into contact with an organic electrolyte.

More specifically, the metal sulfide preferably has a composition represented by formula (1):

M¹Sx (1)

wherein M¹ is a metal, and x is 2.1 to 10.
When a plurality of metals is contained as M¹, the composition ratio of sulfur to the total amount of metals (S/M¹) is preferably set to 2.1 to 10 in terms of the molar ratio.

As described above, in the present invention, the metal sulfide has a high element ratio of sulfur to the metal (M¹). Thus, in the present invention, the use of the metal sulfide can achieve a high specific capacity. In the present invention, the higher the sulfur content (the larger x is), the more likely it is that the specific capacity will be higher, and the lower the sulfur content (the smaller x is), the less likely it is that elemental sulfur will be contained and the more likely it is that the charge-and-discharge cycle characteristics will be higher. In the present invention, even when a sulfide with insufficient charge-and-discharge cycle characteristics is used, the charge-and-discharge cycle characteristics can be improved by forming the coating layer containing a metal oxide described below. Thus, it is particularly useful to use a polysulfide, which easily improves specific capacity while easily deteriorating charge-and-discharge cycle characteristics. Accordingly, x is 2.1 to 10, and preferably 3 to 8.

Below, a vanadium sulfide, which is a preferable sulfide as a core material, is described as an example.

In the present invention, a vanadium sulfide preferably has a crystal structure similar to that of crystalline vanadium tetrasulfide (IV) (VS₄) (which may be referred to below as "VS₄-type crystal structure").

More specifically, the vanadium sulfide preferably has peaks at 15.4°, 35.3°, and 45.0° in the diffraction angle range of 2θ = 10° to 80° with a tolerance of ±1.0° in an x-ray diffractogram obtained using Cu Kα radiation. That is, the vanadium sulfide preferably has peaks in the range of 14.4° to 16.4°, 34.3° to 36.3°, and 44.0° to 46.0°.

In the present invention, the X-ray diffractogram is obtained by a powder X-ray diffraction method (θ-2θ method), and measurement is performed under the following measurement conditions:
Measuring device: D8 ADVANCE (Bruker AXS)
X-ray source: Cu Kα 40 kV/40 mA
Measurement conditions: 2θ = 10° to 80°, 0.1° step, scan rate: 0.02°/sec.

In the present invention, the vanadium sulfide preferably has peaks at the 2θ positions mentioned above, and preferably further has at least one peak at 54.0° or 56.0° (in particular, both) in the diffraction angle range of 2θ = 10° to 80° with a tolerance of ±1.0°.

In the present invention, although the vanadium sulfide has a high sulfur ratio in the average composition, little sulfur is preferably present in the form of elemental sulfur as described below, and sulfur is preferably bound to vanadium to form a low-crystalline sulfide. Accordingly, in the present invention, the vanadium sulfide with a lower crystallinity can have more sites in which lithium ions can be inserted and extracted, and can structurally have more gaps that can serve as conductive pathways for lithium in three dimensions. In addition, the vanadium sulfide has many advantages, such as the ability to make three-dimensional volume changes during charging and discharging. This further improves specific capacity. It is also preferable that few vanadium sulfides (e.g., V₂S₃) used as a raw material are present. In this specification, the average composition of a sulfide refers to the element ratio of each element that constitutes the sulfide as a whole.

The phrase "low crystalline" in the present invention is explained below. In the present invention, in the vanadium sulfide, the peaks at 2θ = 15.4°, 35.3°, and 45.0° preferably all have a full width at half maximum of 0.8 to 2.0° (in particular, 0.9 to 1.6°). In the crystalline vanadium sulfide (IV) (VS₄), the peaks at 2θ = 15.4°, 35.3°, and 45.0° all have a full width at half maximum of 0.2 to 0.6°. Accordingly, in the present invention, the full width at half maximum of the peaks at 2θ = 15.4°, 35.3°, and 45.0° in the vanadium sulfide is preferably larger than that of crystalline vanadium sulfide (IV) (VS₄). Accordingly, in the present invention, the low crystallinity increases the number of sites in which Li can exist stably; thus, the use of the metal sulfide of the present invention as a cathode active material makes it possible to easily improve specific capacity and charge-and-discharge cycle characteristics.

When a material containing a large amount of elemental sulfur or the like is used as a cathode active material, a carbonate-based solvent reacts with elemental sulfur. When an ether-based solvent is used, a large amount of a sulfur component is dissolved. This leads to performance degradation, narrowing the range of choice for solvents. In contrast, in the present invention, for example, when mechanical milling is performed for a sufficient amount of time, the vanadium sulfide contains almost no elemental sulfur or the like; therefore, when used as a cathode active material, the vanadium sulfide does not cause the above problems even if carbonate-based solvents or ether-based solvents are used, making it possible to easily enhance the selectivity of solvents for electrolytes.

More specifically, the most intense peak of sulfur (S₈) is located at 2θ = 23.0° with a tolerance of ± 1.0°. It is thus preferable that the vanadium sulfide does not have a peak with a local maximum at 2θ = 23.0°, which is a peak characteristic of elemental sulfur, with a tolerance of ±1.0° in an X-ray diffractogram obtained using Cu Kα radiation. Alternatively, it is preferable that the area of a peak with a local maximum at 2θ = 23.0° is 20% or less (0 to 20%, in particular, 0.1 to 19%) of the area of the peak with a local maximum at 2θ = 35.3°. This allows the vanadium sulfide in the present invention to be a material that contains almost no elemental sulfur. Additionally, the concern of causing a reaction with an electrolyte as described above can be further reduced, and specific capacity and charge-and-discharge cycle characteristics can be further improved.

In the present invention, it is also preferable that the vanadium sulfide does not have peaks at positions of 2θ = 25.8° and 27.8°, which are peaks characteristic of elemental sulfur, with a tolerance of ±1.0°, or it is preferable that the area of peaks with local maxima at these positions is 10% or less (0 to 10%, in particular, 0.1 to 8%) of the area of a peak with a local maximum at 2θ = 35.3°. This allows the vanadium sulfide to be a material that contains almost no elemental sulfur. Additionally, the concern of causing a reaction with an electrolyte as described above can be further reduced, and specific capacity and charge-and-discharge cycle characteristics can be further improved.

Vanadium sulfides satisfying the above conditions have an intense peak at g(r) = 2.4 Å with a tolerance of ±0.1 Å in the X-ray/neutron atomic pair distribution function (PDF) analysis. Sulfides with better specific capacity and charge-and-discharge cycle characteristics preferably have a shoulder peak at g(r) = 2.0 Å and preferably also have a peak at g(r) = 3.3 Å. In other words, the vanadium sulfide preferably has not only V-S bonds but also S-S bonds (disulfide bonds).

In the present invention, the vanadium sulfide can be obtained, for example, by a production method that comprises subjecting a vanadium sulfide and sulfur used as raw materials or intermediates to mechanical milling.

Mechanical milling is a method of milling and mixing raw materials while imparting mechanical energy. According to this method, a mechanical impact and friction are given to raw materials to mill and mix the materials, whereby a vanadium sulfide and sulfur vigorously come into contact with each other and become divided into fine particles to allow the reaction of the raw materials to proceed. That is, in this case, mixing, pulverization, and the reaction occur simultaneously. This enables the reaction of the raw materials to reliably proceed without heating the raw materials at a high temperature. Mechanical milling may provide a metastable crystal structure that cannot be obtained by ordinary heat treatment.

Specific examples of mechanical milling include mixing and pulverization using a mechanical pulverizer, such as ball mills, bead mills, rod mills, vibration mills, disc mills, hammer mills, and jet mills.

These raw materials or intermediates may all be mixed together simultaneously and subjected to mechanical milling. Alternatively, after a portion of the raw materials or intermediates are first subjected to mechanical milling, the remaining materials may be added and subjected to mechanical milling.

In particular, in the production of a vanadium sulfide with a high sulfur content (the composition ratio of sulfur to vanadium (S/V) being 3.3 or more in terms of the molar ratio), a crystalline vanadium sulfide can be obtained depending on the mass to be fed. Thus, in order to easily obtain a low-crystalline vanadium sulfide with excellent specific capacity and excellent charge-and-discharge cycle characteristics, it is preferred to first obtain a desired low-crystalline sulfide as an intermediate by subjecting a vanadium sulfide and a portion of sulfur to mechanical milling, and then subjecting the obtained low-crystalline sulfide and the remaining sulfur to mechanical milling.

Preferable examples of specific vanadium sulfides that can be used as raw materials include crystalline vanadium sulfide (III) (V₂S₃). The vanadium sulfide is not particularly limited, and any commercially available vanadium sulfide can be used. It is particularly preferable to use a high-purity vanadium sulfide. Since a vanadium sulfide is mixed and pulverized by mechanical milling, the particle size of the vanadium sulfide to be used is also not limited. A commercially available vanadium sulfide powder can usually be used.

As sulfur, it is possible to use elemental sulfur (S₈) in an amount necessary to form a sulfide having a desired composition. The sulfur used as a raw material is also not particularly limited, and any sulfur can be used. It is particularly preferable to use high-purity sulfur. Since sulfur is mixed and pulverized by mechanical milling, the particle size of the sulfur to be used is also not limited. A commercially available sulfur powder can usually be used.

When multiple-step (in particular, two-step) mechanical milling is used as described above, the intermediate may be, for example, a low-crystalline vanadium sulfide having a desired composition (e.g., low-crystalline VS_{2.5}) or the like.

Since the ratio of the raw materials fed almost directly becomes the same as the ratio of the elements of the product, the mixing ratio of the raw materials may be adjusted to the same ratio as the element ratio of vanadium and sulfur in the desired vanadium sulfide. For example, sulfur is preferably used in an amount of 1.2 mol or more (in particular, 1.2 to 17.0 mol, and more preferably 3.0 to 13.0 mol) per mole of vanadium sulfide.

The temperature during the mechanical milling is not particularly limited. In order to suppress the volatilization of sulfur and suppress the formation of the crystalline phases previously reported, the temperature during the mechanical milling is preferably 300°C or less, and more preferably -10 to 200°C.

The mechanical milling time is not particularly limited. The mechanical milling can be performed for any length of time until the desired low-crystalline vanadium sulfide is precipitated.

The atmosphere during mechanical milling is not particularly limited and may be an inert gas atmosphere, such as a nitrogen gas atmosphere and argon gas atmosphere.

For example, the mechanical milling can be performed for 0.1 to 100 hours (in particular, 15 to 80 hours) while applying energy in an amount of 0.1 to 100 kWh/kg of the raw material mixture. The mechanical milling may be performed a plurality of times with pauses in between, if necessary.

When the mechanical milling is repeated a plurality of times, the above conditions can be used for each mechanical milling step.

The mechanical milling can produce the desired low-crystalline vanadium sulfide in the form of a fine powder.

### (1-2) Coating Layer

In the coated metal sulfide particles of the present invention, the coating material that constitutes the coating layer contains a metal oxide. Although the metal oxide itself does not contribute to charging and discharging, the metal oxide can improve charge-and-discharge cycle characteristics while maintaining specific capacity of the sulfide as a core material described above.

In the present invention, the metal element (M²) constituting the metal oxide is preferably titanium and/or aluminum from the viewpoint of suppressing dissolution in an electrolyte by means of the coating layer to be formed, and from the viewpoint of easily improving charge-and-discharge cycle characteristics while maintaining specific capacity. That is, the metal oxide constituting the coating layer to be formed is preferably oxidized titanium (e.g., TiOₓ₁; 1<x1≤ 2) and/or oxidized aluminum (e.g., Al₂Oₓ₂; 2<x2≤3). In particular, a titanium oxide and/or aluminum oxide is preferred. These elements may be used alone or in a combination of two or more.

The coating material that constitutes the coating layer is preferably a crystalline material from the view point of increasing the crystallinity of the coating material that constitutes the coating layer and further improving charge-and-discharge cycle characteristics.

The coating layer containing the coating material described above is coated on part or all of the surface of the sulfide as a core material described above. In terms of the coverage, in particular, the entire surface of the metal sulfide as a core material is preferably coated in order to further suppress dissolution of polysulfide and further improve charge-and-discharge cycle characteristics by uniform coating. From these viewpoints, the coverage by the coating layer is preferably 50 to 100%, more preferably 70 to 100%, and still more preferably 80 to 100%. The coverage by the coating layer is determined by SEM-EDX measurement. In the present invention, "coverage" means the ratio of the number of particles in which 0.10 atomic% or more of the metal element (M²), which is the coating layer, is detected relative to the number of particles subjected to elemental analysis by SEM-EDX measurement.

The thickness of the coating layer containing the coating material described above is preferably 0.5 to 500 nm, and more preferably 1 to 200 nm, from the viewpoint of suppressing dissolution in an electrolyte by the coating layer to be formed, and from the viewpoint of easily maintaining specific capacity and easily improving charge-and-discharge cycle characteristics. The thickness of the coating layer is measured by TEM-EDX.

As long as the performance of the coated metal sulfide particles of the present invention is not impaired, the coated metal sulfide particles of the present invention may contain other impurities. Examples of such impurities include the raw materials of the metal sulfide described above, metal atoms (M¹) that may be introduced in the raw materials, oxygen, etc. that may be introduced in the raw materials or during the production process.

The amount of these impurities is preferably in a range that does not impair the performance, and is usually preferably 2 mass% or less (0 to 2 mass%), and more preferably 1.5 mass% or less (0 to 1.5 mass%). As an impurity, the elemental sulfur content is preferably as low as possible, as mentioned above.

The coated metal sulfide particles of the present invention described above is capable of improving charge-and-discharge cycle characteristics while maintaining excellent specific capacity, and is thus useful as a cathode active material for lithium-ion secondary batteries (in particular, a cathode active material for lithium sulfur batteries).

### 2. Production Method for Coated Metal Sulfide Particles

The method for producing coated metal sulfide particles of the present invention may be any method. For example, the coated metal sulfide particles of the present invention can be produced by a method comprising the step of immersing a metal sulfide as a core material in a solution of metal alkoxide.

The metal sulfide as a core material can be produced according to the method described in previously reported publications (e.g., WO2018/181698, WO2014/148432, WO2015/049986, JP2018-111616A, and JP2018-172244A), as described above. The shape of the metal sulfide as a core material may be adjusted so that the coated metal sulfide particles of the present invention have a desired size. It is also possible to use a material with a large particle size as the metal sulfide as a core material, and adjust the average particle size by pulverization in a mortar or the like.

The metal alkoxide for use in forming the coating layer may be any metal alkoxide as long as it is a material from which a metal oxide can be obtained through a reaction (a metal oxide precursor). It is preferable to use a metal alkoxide that contains the same metal element (M²) as that constituting the coating layer to be obtained. In particular, titanium alkoxides (e.g., titanium ethoxide and titanium isopropoxide), aluminum alkoxides (e.g., aluminum isopropoxide), and the like are preferred in terms of easily forming the coating layer and in terms of solubility in solvents as the coating layer. These metal alkoxides may be used alone or in a combination of two or more.

The solvents that can be used in the solution of metal alkoxide are preferably those in which the metal sulfide as a core material can be dispersed without undergoing reaction or dissolution, and in which the metal alkoxides mentioned above dissolve. Specifically, higher alcohols, such as propyl alcohol (normal, iso), butanol (normal, sec), isobutyl alcohol, and tert-butyl alcohol (in particular, alcohols having 3 to 6 carbon atoms) are preferred. Lower alcohols (alcohols having 1 to 2 carbon atoms) undesirably react with and dissolve the sulfide as a core material. When the higher alcohols mentioned above are used as solvents, they are preferably highly dehydrated. Specifically, the moisture content is preferably 0.0 to 50 ppm, and particularly 0.0 to 10 ppm, based on 100 mass% of the total amount of the higher alcohols. The method of dehydration may be any method and can be common methods. These solvents are preferably appropriately selected according to the metal sulfide as a core material and the metal alkoxide for use. Further, these solvents may be used alone or in a combination of two or more.

The concentration of the metal alkoxide in the solution of metal alkoxide is not particularly limited. The concentration is preferably adjusted so that it is easy to perform coating on the metal sulfide as a core material, and the coverage is as described above. Specifically, the concentration is preferably 1 vol% to 15 vol%, and more preferably 2 vol% to 5 vol%.

The method for immersing the metal sulfide as a core material in the solution of metal alkoxide is not particularly limited. For example, a metal sulfide as a core material and a metal alkoxide can be added to the solvent simultaneously or sequentially. In particular, it is preferred to first dissolve a metal alkoxide in a solvent to obtain a solution, and then immerse the metal sulfide as a core material in the solution, from the viewpoint of more uniformly perform coating of a coating material on the metal sulfide as a core material. The immersion time is not particularly limited. From the viewpoint of more easily perform coating on the metal sulfide as a core material and adjusting the coverage to be as described above, the immersion time is preferably 5 to 120 min, and more preferably 30 to 90 min. The temperature during immersion (temperature of the solution of metal alkoxide) is not particularly limited. The temperature is preferably 10 to 100°C, and particularly preferably 15 to 80°C, from the viewpoint of more easily performing coating on the metal sulfide as a core material and adjusting the coverage to be as described above. The atmosphere during immersion is not particularly limited and is usually an inert atmosphere, such as a nitrogen gas atmosphere or argon gas atmosphere. The resulting product is then optionally stirred to obtain a suspension, and the suspension is subjected to solid-liquid separation to thus obtain coated metal sulfide particles of the present invention. The immersion may be performed once or repeatedly, such as several times (e.g., 2 to 10 times, in particular 2 to 5 times) to form a desired coating layer. The resulting product may then be optionally stirred to obtain a suspension, and the suspension may be subjected to solid-liquid separation to thus obtain coated metal sulfide particles of the present invention.

The method for solid-liquid separation is not particularly limited, and known methods, such as filtration and centrifugal separation, can be performed.

Subsequently, the resulting product may be optionally exposed to air or immersed in a water-containing organic solvent. It is also possible to perform both exposure to air and immersion in a water-containing organic solvent. In this case, it is easy to perform exposure to air after immersion in a water-containing organic solvent.

When immersion in a water-containing organic solvent is performed, preferable examples of usable organic solvents include alcohols (in particular, alcohols having 1 to 3 carbon atoms), such as methyl alcohol, ethyl alcohol, and propyl alcohol (normal, iso). The organic solvents mentioned above preferably contain water. Specifically, the water content is preferably 1.0 to 30.0 mass%, and particularly preferably 2.0 to 10.0 mass%, based on 100 mass% of the total amount of the alcohol. The method for adding water is not particularly limited, and common methods may be used. These solvents are preferably appropriately selected according to the metal sulfide as a core material and the metal alkoxide for use. Further, these solvents may be used alone or in a combination of two or more.

When the obtained coated metal sulfide particles are immersed in a water-containing organic solvent, the immersion time is not particularly limited. From the viewpoint of easily removing impurities and limiting the penetration into the active material, the immersion time is preferably 30 seconds to 10 minutes, and more preferably 1 to 5 minutes. The temperature during immersion (the temperature of the water-containing organic solvent) is not particularly limited. The temperature is preferably 0 to 50°C, and particularly preferably 20 to 30°C, from the viewpoint of more easily removing impurities and from the viewpoint of reactivity with the active material surface. Further, the atmosphere during immersion is not particularly limited. Typically, the atmosphere may be an inert atmosphere, such as a nitrogen gas atmosphere or argon gas atmosphere. The atmosphere may otherwise be air. To adjust the film thickness, an inert atmosphere is preferred.

When the obtained coated metal sulfide particles are exposed to air, it is preferable to perform post-treatment that is commonly performed, such as drying and/or heat treatment, in air. In this case, the temperature during drying and/or heat treatment is not particularly limited. Even with heating at low temperatures, the coverage is further improved, and a firm and uniform coating layer is easily formed. The heating temperature is thus preferably 25 to 80°C, and more preferably 50 to 80°C. The heating time is preferably 20 to 240 minutes, and more preferably 90 to 150 minutes. Heating the sulfide used for a cathode active material at a temperature higher than 100°C is typically said to cause dissolution of elemental sulfur. This is likely to lead to deterioration of charge-and-discharge cycle characteristics. As described above, in the present invention, after synthesizing the sulfide as a core material, all of the steps can be performed at a temperature of 100°C or lower to produce the coated metal sulfide particles. In addition, a temperature higher than 100°C is not expected to be applied to the cathode active material during the production of lithium-ion secondary batteries and during charging and discharging as well. Therefore, from this point of view as well, in the present invention, the dissolution of elemental sulfur is easily suppressed, and charge-and-discharge cycle characteristics are easily improved.

The coated metal sulfide particles produced in this manner are capable of improving charge-and-discharge cycle characteristics while maintaining the specific capacity.

### 3. Cathode for Lithium-ion Batteries and Lithium-ion Secondary Battery

The coated metal sulfide particles of the present invention are capable of improving charge-and-discharge cycle characteristics while maintaining specific capacity as described above. Using these characteristics, the coated metal sulfide particles of the present invention are effectively used as a cathode active material for lithium-ion secondary batteries. In the present specification, "lithium-ion secondary battery" means a secondary battery that charges and discharges using lithium ions as a charge carrier, and includes metallic lithium secondary batteries, which use a lithium metal as an anode active material, lithium-sulfur batteries, which use a sulfur-containing material as a cathode active material, and the like. In particular, the coated metal sulfide particles of the present invention have improved charge-and-discharge cycle characteristics while maintaining specific capacity of the metal sulfide as a core material, and are thus useful as a cathode active material for lithium-ion secondary batteries (in particular, as a cathode active material for lithium-sulfur batteries). Lithium-ion secondary batteries in which the coated metal sulfide particles of the present invention are used as a cathode active material do not easily cause dissolution in electrolytes and are thus characterized by excellent charge-and-discharge cycle characteristics. Therefore, the coated metal sulfide particles of the present invention are preferably used for non-aqueous electrolyte lithium-ion secondary batteries, in which a non-aqueous solvent-based electrolyte is used as an electrolyte.

The non-aqueous electrolyte lithium-ion secondary batteries may have the same structures as known lithium-ion secondary batteries, except that the coated metal sulfide particles of the present invention are used as a cathode active material. For example, the non-aqueous electrolyte lithium-ion secondary batteries may have the same basic structures as known non-aqueous electrolyte lithium-ion secondary batteries, except that the coated metal sulfide particles are used as a cathode active material.

In terms of the cathode, the coated metal sulfide particles of the present invention may be used as a cathode active material. Further, for example, a cathode composite prepared by mixing the coated metal sulfide particles of the present invention optionally with a conductive reagent and a binder may be supported on a cathode current collector, such as aluminum, nickel, titanium, gold, silver, copper, stainless steel, or carbon cloth. Examples of conductive reagents for use include carbon materials (e.g., graphite, coke, carbon black, and activated carbon), conductive fibers (acicular carbon; carbon nanotube; fibers produced by carbonizing vapor-phase grown carbon and pitch (by-products of petroleum, coal, coal tar, etc.) as raw materials at a high temperature; carbon fibers produced by using acrylic fibers), corrosion-resistant metals (e.g., titanium and gold), carbides (e.g., SiC and WC), and nitrides (e.g., Si₃N₄ and BN). Binders are not particularly limited and may be known materials. Examples include styrene-butadiene rubber, carboxymethyl cellulose, polyvinylidene fluoride (PVDF), and polyimide. Binders containing a reaction group that is crosslinked by heating, irradiation with ultraviolet rays, or the like can also be preferably used. Examples of the reaction group include vinylene, hydroxy, epoxy, allyl, and carbonyl, as well as reaction groups obtained by replacing some of the carbon atoms in these reaction groups with a different element. Examples of the shape of the cathode current collector include, but are not particularly limited to, metal foil (thickness: 10 to 100 µm), perforated metal foil (thickness: 10 to 100 µm, hole diameter: 0.1 to 10 mm), expanded metal, foam metal plates, and glassy carbon plate.

The anode active material for use may be, for example, known anode active materials, such as lithium metal, carbon-based materials (e.g., activated carbon and graphite), silicon, silicon oxide, Si-SiO-based materials, and lithium titanium oxide. From the viewpoint of specific capacity, lithium metal is preferred. These anode active materials and optionally a conductive reagent, binder, etc. may also be supported on an anode current collector, such as aluminum, nickel, titanium, gold, silver, copper, stainless steel, carbon, or the like. Examples of conductive reagents for use include carbon materials (e.g., graphite, coke, carbon black, and activated carbon), conductive fibers (acicular carbon; carbon nanotube; fibers produced by carbonizing vapor-phase grown carbon and pitch (by-products of petroleum, coal, coal tar, etc.) as raw materials at a high temperature; carbon fibers produced by using acrylic fibers), corrosion-resistant metals (e.g., titanium and gold), carbides (e.g., SiC and WC), and nitrides (e.g., Si₃N₄ and BN). Binders are not particularly limited and may be known materials. Examples include styrene-butadiene rubber, carboxymethyl cellulose, polyvinylidene fluoride (PVDF), and polyimide. Binders containing a reaction group that is crosslinked by heating, irradiation with ultraviolet rays, or the like can also be preferably used. Examples of the reaction group include vinylene, hydroxy, epoxy, allyl, and carbonyl, as well as reaction groups obtained by replacing part of the carbon atoms in these reaction groups with a different element. Examples of the shape of the anode current collector include, but are not particularly limited to, metal foil (thickness: 10 to 100 µm), perforated metal foil (thickness: 10 to 100 µm, hole diameter: 0.1 to 10 mm), expanded metal, foam metal plates, and glassy carbon plate.

As a separator, for example, a material that is made of a polyolefin resin, such as polyethylene or polypropylene, fluororesin, nylon, aromatic aramid, inorganic glass, or like materials and that is in the form of a porous membrane, a nonwoven fabric, a woven fabric, or the like can be used.

The non-aqueous electrolyte is not particularly limited, and a known organic solvent and an electrolyte salt may be used in combination. Examples of solvents for non-aqueous electrolytes include solvents known as solvents for non-aqueous solvent-based secondary batteries, such as carbonates, ethers, nitriles, sulfur-containing compounds, ionic liquids, and solvated ionic liquids. In particular, when elemental sulfur is used as a cathode active material, neither carbonates nor ethers can be used as a solvent. This is because a carbonate, if used as a solvent, reacts with elemental sulfur; whereas an ether, if used as a solvent, causes dissolution of a large amount of a sulfur component in an electrolyte, thus incurring performance degradation. In contrast, the coated metal sulfide particles of the present invention, when used as a cathode active material, can solve these problems and make any of the solvents applicable, thus enhancing the selectivity of the solvent used in the non-aqueous electrolyte.

The non-aqueous electrolyte lithium-ion batteries may also be any shape, such as cylindrical or square.

### Examples

The present invention is described in detail below with reference to Examples and Comparative Examples. However, the present invention is certainly not limited to the following Examples.

### Synthesis Example 1: Synthesis of Vanadium Sulfide (Core Material)

Commercially available vanadium sulfide (III) (V₂S₃; produced by Kojundo Chemical Laboratory Co., Ltd.) and commercially available sulfur (produced by Fujifilm Wako Pure Chemical Corporation) were weighed in an argon gas atmosphere in a glove box (dew point: -80°C) so that the molar ratio was 1:6, and sealed in a glass tube under vacuum. The sample vacuum-sealed in the tube was fired at 400°C for 5 hours in a tubular furnace. The fired sample was fired at 200°C for 8 hours under vacuum to remove excess sulfur, thereby synthesizing crystalline vanadium sulfide VS₄ (c-VS₄).

Next, the obtained crystalline VS₄ (c-VS₄) was subjected to mechanical milling (ball diameter: 4 mm; rotation speed: 270 rpm) with a ball mill apparatus (PL-7 produced by Fritsch) for 40 hours in an argon gas atmosphere in a glove box (dew point: -80°C) to synthesize low-crystalline vanadium sulfide VS₄ (a-VS₄).

### Example 1

In an argon atmosphere, 0.25 g of the low-crystalline vanadium sulfide VS₄ (a-VS₄) obtained in Synthesis Example 1 was added to 100 mL of an isopropanol solution of titanium isopropoxide (Ti[OCH(CH₃)₂]₄) with a concentration of 5 vol%, and immersed in the solution for 1 hour under stirring at 200 rpm at 25°C, followed by filtration. The resulting product was pre-dried at 25°C for 4 hours in an argon atmosphere and then exposed to air for 1 hour. Thereafter, drying and heat treatment were performed at 50°C for 2 hours on a hot plate in an argon atmosphere, thereby producing a low-crystalline vanadium sulfide coated with a titanium-containing compound on the surface (coated vanadium sulfide) as a cathode active material of Example 1. The results of composition analysis etc. by EDX confirmed a film of titanium oxide (TiOₓ₁; 1<x1≤ 2) with a thickness of 2 to 5 nm.

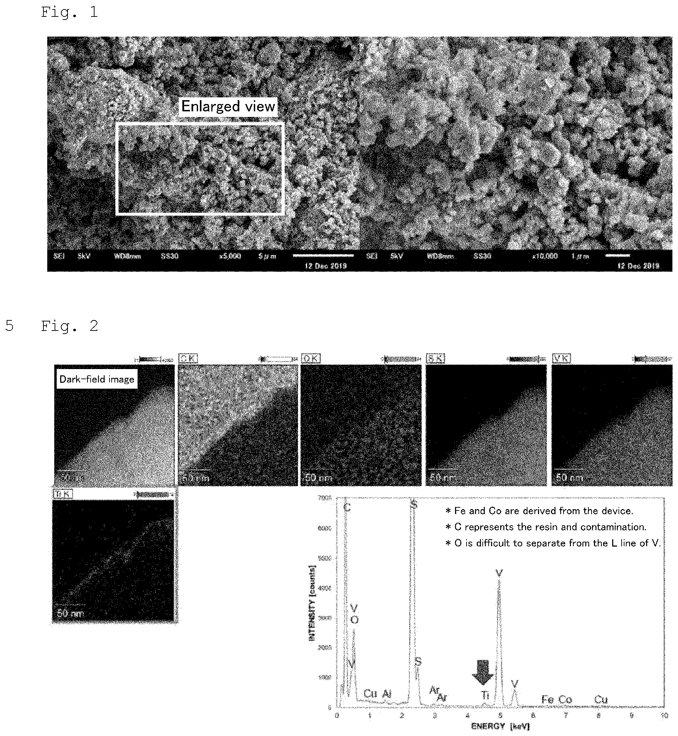

Fig. 1 shows scanning electron microscope images of the obtained titanium oxide-coated low-crystalline vanadium sulfide VS₄ (a-VS₄) (size of the target field of view: 13 µm × 9 µm, number of particles for averaging: 10 or more). As shown in Fig. 1, the obtained titanium oxide-coated low-crystalline vanadium sulfide VS₄ (a-VS₄) had an average particle size of about 3 µm. (When the average particle size was calculated, the size of the target field of view was 13 µm × 9 µm, and the number of particles for averaging was 10 or more.)

Fig. 2 shows the element mapping results near the particle surface of the obtained titanium oxide-coated low-crystalline vanadium sulfide VS₄ (a-VS₄) . The results suggest that the coating layer near the surface of the obtained titanium oxide-coated low-crystalline vanadium sulfide VS₄ (a-VS₄) contained titanium, and that titanium was not diffused inside the vanadium sulfide VS₄ (a-VS₄) particles.

### Example 2

A coated body was produced as a cathode active material of Example 2 in the same manner as in Example 1, except that the concentration of the titanium isopropoxide solution was 1 vol%, and the drying temperature after exposure to air was room temperature (25°C).

### Example 3

A coated body was produced as a cathode active material of Example 3 in the same manner as in Example 1, except that the concentration of the titanium isopropoxide solution was 2 vol%.

### Example 4

A coated body was produced as a cathode active material of Example 4 in the same manner as in Example 1, except that the concentration of the titanium isopropoxide solution was 2 vol%, and the drying temperature after exposure to air was 80°C.

### Example 5

A coated body was produced as a cathode active material of Example 5 in the same manner as in Example 1, except that the concentration of the titanium isopropoxide solution was 10 vol%, and the drying temperature after exposure to air was room temperature (25°C).

### Example 6

A coated body was produced as a cathode active material of Example 6 in the same manner as in Example 1, except that the concentration of the titanium isopropoxide solution was 10 vol%.

### Example 7

A coated body was produced in the same manner as in Example 1, except that the concentration of titanium isopropoxide solution was 15 vol%, and the drying temperature after exposure to air was 80°C.

### Comparative Example 1

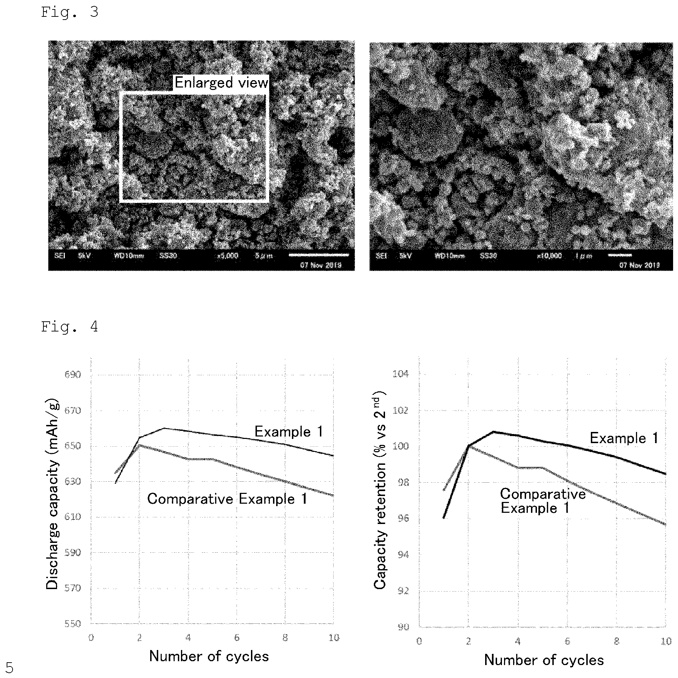

The low-crystalline vanadium sulfide VS₄ (a-VS₄) obtained in Synthesis Example 1 above was used directly (without performing coating) as a cathode active material of Comparative Example 1. Fig. 3 shows scanning electron microscope images of the obtained low-crystalline vanadium sulfide VS₄ (a-VS₄) (size of the target field of view: 13 µm × 9 µm, number of particles for averaging: 10 or more). As shown in Fig. 3, the obtained low-crystalline vanadium sulfide VS₄ (a-VS₄) had an average particle size of about 3 µm. The particle size typically recommended for physical coating is 10 µm, and the obtained low-crystalline vanadium sulfide VS₄ (a-VS₄) did not have a sufficient particle size.

### Comparative Example 2

A coated body was produced in the same manner as in Example 1, except that a sputtering method was used for coating. In the sputtering method, argon plasma sputtering was performed at a vacuum degree of 5.0 Pa using an SC-701 MKII ADVANCE (produced by Sanyu Electron Co., Ltd.). The low-crystalline vanadium sulfide VS₄ (a-VS₄) obtained in Synthesis Example 1 (1 g) was placed on an aluminum target, and sputtering was performed for 30 minutes to form an aluminum oxide film on the surface as a cathode active material of Comparative Example 2. The obtained sample was partially coated (coverage: about 37%) as shown in Table 1.

### Comparative Example 3

A coated body was produced in the same manner as in Example 1, except that a tumbling-fluidization method was used for coating. In the tumbling-fluidization method, treatment was performed at 80°C for 4.5 hours with a titanium isopropoxide solution (15 vol%) using FD-MP-micro (produced by Powrex Corp.). The obtained sample was partially coated (coverage: about 45%) as shown in Table 1.

The coverage in terms of the cathode active materials obtained in Example 1 and Comparative Examples 2 to 3 was calculated from SEM-EDX. Table 1 shows the results.

**Table 1**

| Detection rate of coating component by EDX | | | |
|---|---|---|---|
| | **Technique** | **Condition** | **Detection rate based on point analysis by SEM/EDX (> 0.10%^{*1})** |
| Ex. 1 | Liquid phase (concerned) | 5% TTIP solution, dried at 50°C, and exposed to air for 1 hour | 100% (115/115) |
| Comp. Ex. 2 | Sputtering | Al target 30 minutes for 1 g | 37.0% (74/200) |
| Comp. Ex. 3 | Tumbling-fluidization method | 15% TTIP solution, treatment for4.5 hours | 45.1% (37/82) |

| | | | |
|---|---|---|---|
| *1: The second decimal place is typically unreliable in precision in simplified analysis by the SEM/EDX method. | | | |

Electrochemical cells for testing (lithium secondary batteries) were produced by the following method using the samples obtained in Examples 1 to 7 and Comparative Example 1 as a cathode active material. Then, constant-current charge-and-discharge measurement was performed at 25°C at a current density of 100 mA/g (charge-and-discharge rate: 0.10 C) in the voltage range of 1.5 to 2.6 V with a pause of 10 minutes between cycles.

Slurries were produced by mechanical milling using the samples obtained in Examples 1 to 7 and Comparative Example 1 (cathode active materials), a conductive material (Ketjenblack), and a binder (styrene-butadiene polymer) so that the cathode active material:conductive material:binder was 8:1:1 (mass ratio). Each slurry was applied to aluminum foil coated with carbon to produce a cathode. Lithium metal was used as the counter electrode (anode). As an electrolyte, 1M lithium bis(trifluoromethanesulfonyl)imide (LiTFSI) in a mixed solvent of ethylene carbonate (EC) and propylene carbonate (PC) in a mass ratio of 1:1 (1M LiTFSI EC/PC) was used. As a separator, polypropylene was used.

Fig. 4 shows a comparison of the discharge capacities between the samples obtained in Example 1 and Comparative Example 1 after charge-and-discharge cycles. Table 2 shows the capacity retention of each cycle in Examples 1 to 7 and Comparative Example 1. Typically, immersion in a solution tends to result in excessive coating thickness, which causes a reduction in the capacity by 20 to 30%. However, in the present invention, even with the formation of the coating layer as in Examples 1 to 7, the specific capacity was maintained to be almost the same as that of Comparative Example 1, and the capacity retention was improved.

**Table 2**

| Discharge capacity retention of each cycle (% vs 2^{nd}), coating layer, and coating thickness | | | | | | | | |
|---|---|---|---|---|---|---|---|---|
| | **5** | **10** | **15** | **20** | **25** | **30** | **Coating layer** | **coating thickness** |
| ***Comp. Ex. 1: no coating layer*** | *98.7* | 90.2 | *86.3* | *82.6* | *78.9* | *74.8* | - | - |
| Ex. 1:5% solution, 50°C | 103.7 | 102.5 | 99.6 | 96.0 | 92.0 | 87.3 | TiOₓ | 2-5 nm |
| Ex. 2:1% solution, room temperature (25°C) | 101.1 | 98.2 | 94.9 | 90.3 | 84.9 | 78.8 | TiOₓ | |
| Ex. 3:2% solution, 50°C | 101.1 | 94.3 | 88.0 | 86.6 | 87.3 | 83.8 | TiOₓ | |
| Ex. 4:2% solution, 80°C | 101.4 | 98.4 | 95.7 | 92.6 | 89.6 | 86.0 | TiOₓ | |
| Ex. 5:10% solution, room temperature (25°C) | 103.7 | 100.6 | 96.3 | 91.6 | 86.4 | 80.7 | TiOₓ | |
| Ex. 6:10% solution, 50°C | 105.0 | 101.8 | 97.7 | 92.6 | 87.1 | 81.2 | TiOₓ | |
| Ex. 7:15% solution, 80°C | 98.4 | 95.9 | 93.0 | 89.8 | 85.1 | 81.1 | TiOₓ | |

### Example 8

A coated body was produced in the same manner as in Example 1, except that the concentration of the titanium isopropoxide solution was 15 vol%.

### Example 9

A coated body was produced in the same manner as in Example 1, except that the concentration of the titanium isopropoxide solution was 15 vol% and the drying temperature after exposure to air was room temperature (25°C).

### Example 10

A coated body was produced in the same manner as in Example 1, except that the concentration of the titanium isopropoxide solution was 10 vol% and the drying temperature after exposure to air was 80°C.

### Example 11

A coated body was produced in the same manner as in Example 1, except that the concentration of the titanium isopropoxide solution was 5 vol% and the drying temperature after exposure to air was 80°C.

### Example 12

A coated body was produced in the same manner as in Example 1, except that the concentration of the titanium isopropoxide solution was 5 vol% and the drying temperature after exposure to air was room temperature (25°C).

### Example 13

A coated body was produced in the same manner as in Example 1, except that the concentration of the titanium isopropoxide solution was 2 vol% and the drying temperature after exposure to air was room temperature (25°C).

### Example 14

A coated body was produced in the same manner as in Example 1, except that the concentration of the titanium isopropoxide solution was 1 vol% and the drying temperature after exposure to air was 80°C.

### Example 15

A coated body was produced in the same manner as in Example 1, except that the concentration of the titanium isopropoxide solution was 1 vol% and the drying temperature after exposure to air was 50°C.

Electrochemical cells for testing (lithium secondary batteries) were produced by the following method using the samples obtained in Examples 1 to 4 and 6 to 15 and Comparative Example 1 as a cathode active material. Then, constant-current charge-and-discharge measurement was performed at 25°C at a current density of 100 mA/g (charge-and-discharge rate: 0.10 C) in the voltage range of 1.5 to 2.6 V with a pause of 10 minutes between cycles.

Slurries were produced by mechanical milling using the samples obtained in Examples 1 to 4 and 6 to 15 and Comparative Example 1 (cathode active materials), a conductive material (Ketjenblack), and a binder (styrene-butadiene polymer) so that the cathode active material:conductive material:binder was 8:1:1 (mass ratio). Each slurry was applied to aluminum foil coated with carbon to produce a cathode. Lithium metal was used as the counter electrode (anode). As an electrolyte, 1M lithium bis(trifluoromethanesulfonyl)imide (LiTFSI) in a mixed solvent of ethylene carbonate (EC) and propylene carbonate (PC) in a mass ratio of 1: 1 (1M LiTFSI EC/PC) was used. As a separator, polypropylene was used.

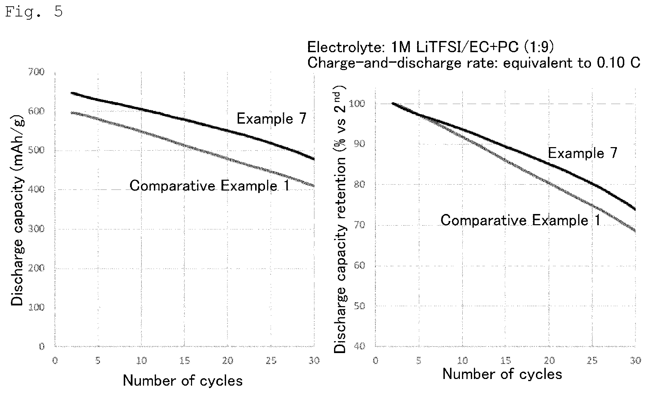

Fig. 5 shows a comparison of the discharge capacities between the samples obtained in Example 7 and Comparative Example 1 after charge-and-discharge cycles. Table 3 shows the capacity retention of each cycle in Examples 1 to 4 and 6 to 15 and Comparative Example 1. Typically, immersion in a solution tends to result in excessive coating thickness, which causes a reduction in the capacity by 20 to 30%. However, in the present invention, even with the formation of the coating layer as in Examples 1 to 4 and 6 to 15, the specific capacity was maintained to be almost the same as that of Comparative Example 1, and the capacity retention was improved.

**Table 3**

| Discharge capacity retention of each cycle (% vs 2^{nd}) | | | | | | | | | | |
|---|---|---|---|---|---|---|---|---|---|---|
| | 5 | 10 | 15 | 20 | 25 | 30 | 35 | 40 | 45 | 50 |
| ***Comp*. *Ex 1: no coating layer*** | 97.1 | 91.7 | 86.0 | 80.4 | 74.8 | 68.6 | 61.4 | 53.1 | 45.2 | 38.4 |
| Ex. 1: 5% solution, 50°C | 97.2 | 91.6 | 85.8 | 80.6 | 75.4 | 69.9 | 63.9 | 57.8 | 51.8 | 46.0 |
| Ex. 2: 1% solution, 25°C | 97.4 | 92.6 | 87.7 | 83.2 | 78.1 | 71.5 | 64.0 | 56.6 | 49.5 | 42.8 |
| Ex. 3: 2% solution, 50°C | 96.7 | 92.4 | 87.6 | 83.2 | 78.1 | 71.9 | 65.0 | 57.8 | 50.9 | 44.2 |
| Ex. 4: 2% solution, 80°C | 98.1 | 93.7 | 89.3 | 85.5 | 81.0 | 75.6 | 69.1 | 62.3 | 55.2 | 48.5 |
| Ex. 6: 10% solution, 50°C | 97.3 | 92.6 | 87.4 | 82.8 | 78.4 | 73.5 | 67.8 | 61.5 | 55.1 | 48.7 |
| Ex. 7:15% solution, 80°C | 97.1 | 92.1 | 87.3 | 83.0 | 78.4 | 72.1 | 65.5 | 58.7 | 51.9 | 45.5 |
| Ex. 8:15% solution, 50°C | 97.4 | 93.6 | 89.5 | 85.5 | 80.4 | 73.8 | 66.4 | 59.0 | 51.7 | 44.8 |
| Ex. 9:15% solution, 25°C | 97.1 | 92.8 | 88.1 | 84.1 | 79.4 | 73.1 | 65.9 | 58.0 | 50.8 | 43.9 |
| Ex. 10: 10% solution, 80°C | 96.8 | 91.9 | 86.3 | 80.9 | 75.7 | 70.1 | 63.3 | 55.4 | 47.5 | 40.6 |
| Ex. 11: 5% solution, 80°C | 97.2 | 93.6 | 89.4 | 85.1 | 80.2 | 73.9 | 66.4 | 58.4 | 50.5 | 43.4 |
| Ex. 12: 5% solution, 25°C | 96.7 | 92.4 | 87.0 | 82.0 | 77.0 | 71.6 | 65.6 | 59.0 | 52.2 | 46.0 |
| Ex. 13: 2% solution, 25°C | 97.2 | 92.5 | 87.8 | 83.6 | 78.8 | 73.0 | 66.0 | 58.8 | 50.0 | 43.8 |
| Ex. 14: 1% solution, 80°C | 98.4 | 93.6 | 88.4 | 83.2 | 79.7 | 74.8 | 68.8 | 61.9 | 54.8 | 48.0 |
| Ex. 15: 1 % solution, 50°C | 96.5 | 91.7 | 86.4 | 81.3 | 75.8 | 69.4 | 62.7 | 56.0 | 49.4 | 43.0 |

## Claims

1. Coated metal sulfide particles comprising a metal sulfide that is partially or totally coated with a coating layer containing a metal oxide, the metal sulfide having a composition ratio of sulfur (S) to a metal (M¹) (S/M¹) of 2.1 to 10 in terms of the molar ratio.

2. The coated metal sulfide particles according to claim 1, wherein the coverage by the coating layer is 50 to 100%.

3. The coated metal sulfide particles according to claim 1 or 2, wherein the metal sulfide has an average particle size of 1.0 to 8.0 µm.

4. The coated metal sulfide particles according to any one of claims 1 to 3, wherein the metal oxide is an oxide of titanium and/or aluminum.

5. The coated metal sulfide particles according to any one of claims 1 to 4, wherein the metal sulfide is a vanadium sulfide.

6. A method for producing the coated metal sulfide particles of any one of claims 1 to 5, comprising the step of immersing the metal sulfide in a solution of metal alkoxide.

7. The production method according to claim 6, wherein a solvent in the solution of metal alkoxide is an alcohol having 3 to 6 carbon atoms.

8. The production method according to claim 6 or 7, the method comprising, after the immersion step, the step of exposure to air and/or immersion in a water-containing organic solvent.

9. The production method according to any one of claims 6 to 8, wherein the step of immersion in the solution of metal alkoxide and the step of exposure to air and/or immersion in the water-containing organic solvent are repeated a plurality of times.

10. A cathode active material for lithium-ion secondary batteries, comprising the coated metal sulfide particles of any one of claims 1 to 5.

11. A cathode for lithium-ion secondary batteries, comprising the cathode active material for lithium-ion secondary batteries of claim 10.

12. A lithium-ion secondary battery comprising the cathode for lithium-ion secondary batteries of claim 11.
